Europäisches Patentamt

European Patent Office

Office européen des brevets

(11) Veröffentlichungsnummer: **0 022 237**
**A1**

(12) # EUROPÄISCHE PATENTANMELDUNG

(21) Anmeldenummer: **80103712.8**

(22) Anmeldetag: **30.06.80**

(51) Int. Cl.³: **G 01 B 11/24**

(30) Priorität: **06.07.79 DE 2927409**

(43) Veröffentlichungstag der Anmeldung:
**14.01.81 Patentblatt 81/2**

(84) Benannte Vertragsstaaten:
**FR GB SE**

(71) Anmelder: **SIEMENS AKTIENGESELLSCHAFT Berlin und München**
**Postfach 22 02 61**
**D-8000 München 22(DE)**

(72) Erfinder: **Klement, Ekkehard, Dr.**
**Siegrunestrasse 1**
**D-8000 München 19(DE)**

(54) Gerät zum Vermessen von Formkörperumrissen.

(57) Es wird ein Gerät beschrieben, bei dem der Umriß des zu vermessenden Formkörpers mit kohärentem Licht beleuchtet und das am Körper vorbeigehende Licht auf eine Sensorfläche eines lichtempfindlichen Sensors reell abgebildet wird. Das bei dieser Abbildung auf der Sensorfläche entstehende Beugungsbild wird ausgewertet.

./...

EP 0 022 237 A1

FIG 2

SIEMENS AKTIENGESELLSCHAFT     Unser Zeichen
Berlin und München            VPA 79 P 7 0 9 1

Gerät zum Vermessen von Formkörperumrissen

Die vorliegende Erfindung bezieht sich auf ein Gerät zum zumindest stückweisen Vermessen von Umrissen von Formkörpern, insbesondere von Drehkörpern..

Ein Beispiel für derartige Formkörper sind Kolbenbolzen für Verbrennungskraftmaschinen. In derartige Bolzen, die zylindrisch ausgebildet sind, werden Einstiche von beispielsweise 10 bis 30 /um Tiefe eingeschliffen, die dazu dienen, auf die Wand des Kolbens ausgeübte Kräfte zu reduzieren. Es besteht der Wunsch, durch genaues Vermessen des ganzen Profils des Bolzens längs einer Mittellinie, d.h. eines bestimmten Umrisses des Bolzens, die Qualität des Schliffs kontrollieren zu können. Dabei soll zumindest in radialer Richtung eine Meßgenauigkeit von mindestens 1 /um erreichbar sein.

Weil solche Kolbenbolzen, wie auch andere Formkörper
Ed 1 Sti/30.5.79

in Serienfertigung hergestellt werden, soll die genaue
Vermessung in kurzen Zeitabständen vorgenommen und so
die Fertigung laufend überwacht werden können.

Es ist daher die Aufgabe der vorliegenden Erfindung, ein
Gerät zu schaffen, welches die sehr genaue Vermessung
von Umrissen von Formkörpern ermöglicht, und welches
zudem für die laufende Überwachung seriengefertigter
Formkörper verwendbar ist.

Diese Aufgabe wird durch die kennzeichnenden Merkmale
des Patentanspruchs 1 gelöst.

Bei sachgemäßer Anwendung des Geräts wird vom Umriß des
zu vermessenden Formkörpers ein Beugungsbild auf der
Auffangfläche erzeugt, welches dem Beugungsbild einer
Kante eines dünnen lichtundurchlässigen Schirms gleicht
oder ähnlich ist. Die Intensitätsverteilung in dem
Beugungsbild wird von dem Sensorfeld in entsprechende
elektrische Signale umgewandelt, die auf elektronischem
Wege weiterverarbeitet werden können und mit denen das
Beugungsbild nach bestimmten Kriterien ausgewertet und
dadurch der Verlauf des zu vermessenden Umrisses oder
Umrißstücks ermittelt werden kann. Bestimmte Invarianzeigenschaften des Beugungsbildes hinsichtlich seiner
Lage und Größe ermöglichen dabei die geforderte
hohe Meßgenauigkeit.

Das Gerät ist zur Vermessung von Formkörpern beliebiger
Größe oberhalb der Meßgenauigkeit geeignet.

In der Regel werden die Abmessungen des zu vermessenden
Formkörpers größer als der Durchmesser des Lichtstrahlbündels sein. Um in einem solchen Fall ein Umrißstück
vermessen zu können, das sich über einen Bereich erstreckt, der größer ist als der Durchmesser des Lichtstrahlbündels, ist es zweckmäßig, wenn der Formkörper und
das Lichtstrahlbündel in zwei verschiedenen Richtungen
in der Objektebene relativ zueinander verschiebbar sind.

Diese Ausführungsform der Erfindung ist besonders für
den Fall geeignet, bei dem wie beim Kolbenbolzen mit
Einstichen der Verlauf des zu vermessenden Umrisses
von dem Verlauf eines bekannten Umrisses - bei dem mit
Einstichen versehenen Kolbenbolzen eine Mantellinie des
noch nicht mit Einstichen versehenen Kolbenbolzens -
um weniger als den Durchmesser des Lichtstrahlbündels
abweicht. In einem solchen Fall wird das Lichtstrahlbündel relativ zum Körper entlang des bekannten Umrisses
verschoben.

Des weiteren ist eine bevorzugte Ausführungsform der
Erfindung so ausgebildet, daß der Formkörper und die
Sensorfläche in Richtung der Achse des Lichtstrahlbündels
relativ zur Abbildungsoptik verschiebbar sind. Dadurch
können Objekt- und Bildebene und damit die Vergrößerung
der Abbildung variiert und dem zu vermessenden Umriß
und/oder der vorgegebenen Meßgenauigkeit angepaßt werden.

Um bei verschiedenen Vergrößerungen messen zu können,
ist eine vorteilhafte Ausführungsform des Geräts so
ausgebildet, daß die Sensorfläche in der Bildebene
relativ zur Abbildungsoptik verschiebbar ist.

Eine vorteilhaft zur Vermessung von Kolbenbolzen mit
Einstichen verwendbare Ausführungsform der Erfindung
ist so ausgebildet, daß die Abbildungsoptik eine Zylinderlinse und die Sensorfläche Sensoreinzelflächen
mehrerer Sensoren umfaßt, und daß die Sensoreinzelflächen in einer Zeile nebeneinander angeordnet

sind, die senkrecht zu einer Zylinderlinsenachse verläuft, die parallel zu einer zylindrischen Mantelfläche
der Zylinderlinse ist.

Zweckmäßigerweise ist dabei die Zylinderlinse so angeordnet, daß die Zylinderlinsenachse parallel zu einer der
verschiedenen Richtungen,  in der das Lichtstrahlbündel
und der zu vermessende Formkörper relativ zueinander verschiebbar sind, ausgerichtet ist.

Eine bevorzugte Ausführungsform der Erfindung ist
weiter so ausgebildet, daß die Lichtquelle einen Laser
und eine im Laserstrahl angeordnete Aufweitungsoptik
umfaßt, die den Laserstrahl auf einen größeren Querschnitt
des Lichtstrahlbündels aufweitet.

Bei dieser Ausführungsform ist es zweckmäßig, wenn die
Lichtquelle zudem eine im Strahlengang des vom Laser
ausgesandten Lichts angeordnete Modenblende aufweist.

Weitere bevorzugte Ausführungsformen der Erfindung, die
insbesondere für die Vermessung besagter Kolbenbolzen
geeignet, aber nicht darauf beschränkt sind, gehen aus
weiteren Unteransprüchen hervor.

Ausführungsbeispiele der Erfindung werden anhand der
Figuren in der nun folgenden Beschreibung, aus der sich
weitere Vorteile der Erfindung ergeben werden, näher
beschrieben. Es zeigen

Figur 1 einen zentralen Längsschnitt durch einen mit
          ringförmigen Einstichen versehenen Kolbenbolzen,
          bei dem die Einstiche übertrieben tief dargestellt sind,

Figur 2 in schematischer Darstellung eine Seitenansicht
          quer zur Achse des Lichtstrahlbündels ein erstes
          Ausführungsbeispiel eines erfindungsgemäßen Geräts,

Figur 3 einen typischen Intensitätsverlauf des vom Ausführungsbeispiel nach Figur 2 in der Bildebene B
erzeugten Beugungsbildes längs einer bestimmten
Richtung,

Figur 4 in Draufsicht von oben eine schematische Darstellung einer Variante des in Figur 2 dargestellten Ausführungsbeispiels,

Figur 5 in Draufsicht von oben ein anderes Ausführungsbeispiel der Erfindung in schematischer Darstellung.

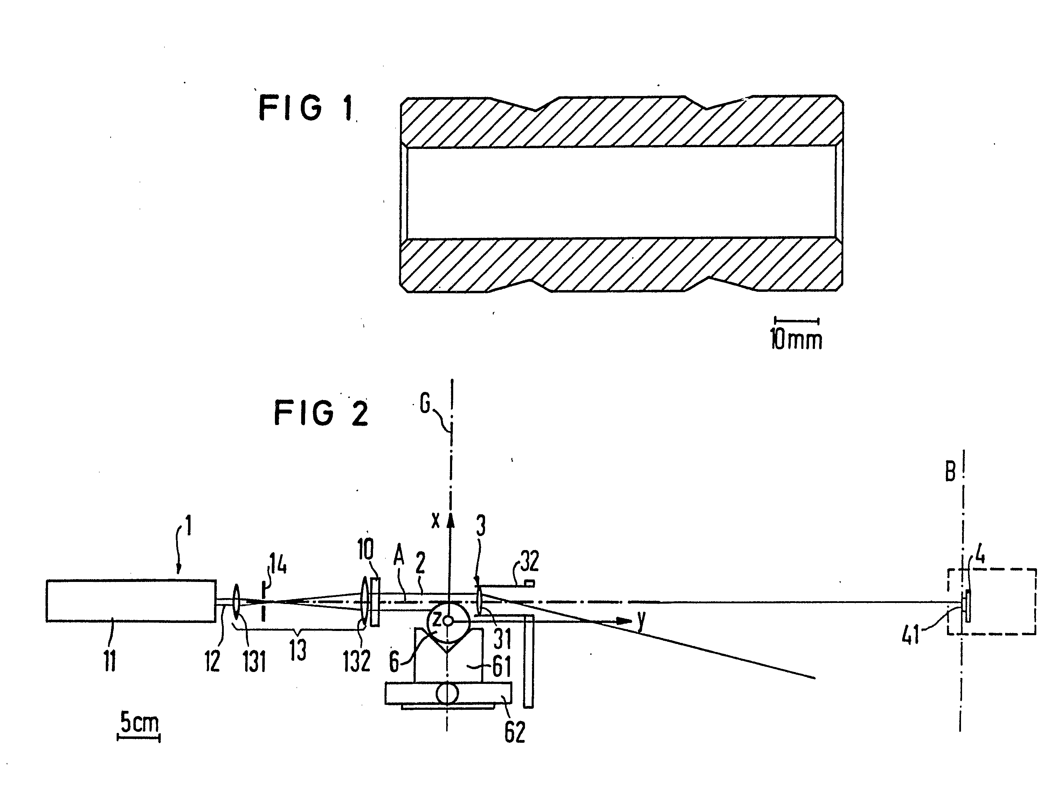

In der Figur 1 ist im zentralen Längsschnitt ein zu vermessender Kolbenbolzen bis auf die Tiefe der Einstiche
maßstabsgetreu dargestellt. Die äußere Begrenzungslinie
dieses Bolzens stimmt mit einer Mantellinie und damit
mit einem bestimmten Umriß des Bolzens überein. Die
Abmessungen dieses Bolzens ergeben sich aus dem in
der Figur 1 eingetragenen Maßstab.

Aus der Figur 2 ist der prinzipielle Aufbau der ersten
Ausführungsform der Erfindung zu entnehmen. Ein Helium-
Neon-Laser 11 von 0,5 mW Leistung sendet einen Laserstrahl 12 aus. In diesem Laserstrahl 12 ist eine Aufweitungsoptik 13 angeordnet, die den Laserstrahl 12
auf einen größeren Querschnitt des Lichtstrahlbündels
2 aufweitet. Die Aufweitungsoptik 13 besteht vorzugsweise aus einem telezentrischen System mit zwei Sammellinsen 131 und 132. In der gemeinsamen Brennebene beider
Linsen 131 und 132 des telezentrischen Systems ist zweckmäßigerweise eine Modenblende 14 angeordnet. Hinter der
Linse 132 ist ein Abschwächer 10 angeordnet, der zur Anpassung der Lichtleistung an die Sensoreinrichtung 4
dient. Ein solcher Abschwächer kann an beliebiger Stelle
zwischen dem zu vermessenden Formkörper und dem Laser 11
angeordnet sein.

Der Laser 11, das telezentrische System 13 mit den Linsen 131 und 132, der Modenblende 14 und ggf. dem Abschwächer 10 bilden zusammen die Lichtquelle 1 des Gerätes, welches das Lichtstrahlbündel 2 als Parallelstrahlbündel längs einer Achse A aussendet.

Im Strahlengang dieses parallelen Lichtstrahlbündels 2 ist eine Abbildungsoptik 3 angeordnet, welche eine in einer Fassung 32 befestigte Zylinderlinse 31 umfaßt. Die Abbildungsoptik ist so angeordnet, daß ihre optische Achse mit der Achse A des Lichtstrahlbündels zusammenfällt. In einem Abstand von der bildseitigen Hauptebene (nicht dargestellt) der Abbildungsoptik ist in der Achse A eine Sensorfläche 41 einer Sensoreinrichtung 4 angeordnet. Diese Sensorfläche 4 umfaßt Sensoreinzelflächen mehrerer einzelner lichtempfindlicher Sensoren.

Die Sensorfläche 41 ist in einer Bildebene B angeordnet, der eine zwischen der Lichtquelle 1 und der Abbildungsoptik 3 angeordnete Objektebene G zugeordnet ist. Objektebene G wie Bildebene B werden von der Achse A senkrecht durchstoßen, so daß nur deren Spuren in der Figur 2 sichtbar sind.

Der zu vermessende Formkörper 6 ist derart anzuordnen, daß er in der Objektebene G vom Lichtstrahlbündel 2 zumindest gestreift wird und Licht dieses Lichtstrahlbündels so an ihm vorbei durch die Abbildungsoptik 3 zur Sensorfläche 41 gelangt. In dem in Figur 2 dargestellten Beispiel ist der Formkörper 6 etwa so im Strahlengang des Lichtstrahlbündels 2 angeordnet, daß er etwa eine Hälfte des Bündels 2 ausblendet.

Die tatsächlichen Größenverhältnisse und Abmessungen des in Figur 2 dargestellten Ausführungsbeispiels lassen sich mit Hilfe des eingetragenen Maßstabs mit hinreichender Genauigkeit entnehmen.

Danach ist das Verhältnis des Abstandes der Bildebene B von der bildseitigen Hauptebene der Zylinderachse und des Abstandes der Objektebene von der objektseitigen Hauptebene der Zylinderlinse in etwa gleich 15 gewählt. Diese Vergrößerung reicht aus, um einen Formkörper von der Größe des Kolbenbolzens nach Figur 1 oder 2 auf einen Mikrometer genau zu vermessen.

In der Figur 2 ist die Zylinderlinse 31 so angeordnet, daß ihre Zylinderachse, d.h. eine durch die Zylinderlinse 31 hindurchgehende bestimmte Achse, die parallel zu einer Zylindermantelfläche der Zylinderlinse verläuft, senkrecht zur Zeichenebene verläuft. Ebenso ist der zu vermessende Formkörper 6 angeordnet, d.h. seine Drehachse - der Kolbenbolzen mit den Einstichen ist ein Rotationskörper - steht ebenfalls senkrecht auf der Zeichenebene. Die zu vermessende Mantellinie dieses Drehkörpers liegt genau in der Objektebene G. In diesem Sonderfall treten keine Unschärfen oder Verzerrungen im Beugungsbild in der Bildebene B auf.

Im Ausführungsbeispiel nach Figur 2 ist der Formkörper 6 in der z-Richtung senkrecht zur Zeichenebene, d.h. in der Objektebene G, relativ zum Lichtstrahlbündel 2 und zur Abbildungsoptik verschiebbar. Dadurch kann die gesamte Mantellinie des Körpers abgetastet werden. Zudem ist der Formkörper 6 in einer in der Zeichenebene liegenden x-Richtung, die senkrecht auf der z-Richtung und auf der Achse A steht, d.h. ebenfalls in der Objektebene G, relativ zum Lichtstrahlbündel 2 und zur Abbildungsoptik 3 verschiebbar, wodurch der Körper in geeigneter Weise in den Strahlengang des Lichtstrahlbündels 2 einbringbar ist.

Außerdem ist der Formkörper 6 in der y-Richtung, d.h. parallel zur Achse A des Lichtstrahlbündels 2 relativ zur Abbildungsoptik 3 verschiebbar.

Die Sensorfläche 41 ist ebenfalls in der Bildebene B relativ zur Abbildungsoptik 3 in der x-Richtung und in der z-Richtung verschiebbar. Eine Verschiebbarkeit der Sensorfläche 41 in der x-Richtung ist nicht erforderlich, wenn die zu vermessenden Formkörper in ihren Abmessungen nicht zu stark voneinander abweichen. Dies ist beispielsweise bei der Serienfertigung bestimmter Kolbenbolzen der Fall. Das Gerät wird aber flexibler wenn auch die Sensorfläche 41 in y-Richtung verschiebbar ist.

Im Ausführungsbeispiel nach der Figur 2 werden Kolbenbolzen nach Figur 1 als Formkörper 6 vermessen. Der Kolbenbolzen liegt in einem auf einem motorgetriebenen Präzisionsschiebetisch 62 montierten Prisma 61. Der Kolbenbolzen 6 ist so angeordnet, daß seine Achse parallel zur z-Richtung verläuft, und daß er in x-Richtung etwa bis zur Achse A in das Lichtstrahlbündel hineinragt. Zur Vermeidung von Justierarbeit wird zweckmäßigerweise für jeden gegebenen Kolbenbolzendurchmesser ein eigenes Prisma verwendet, das mit einem geeigneten Schnellverschluß auf dem Schiebetisch 61 befestigbar ist.

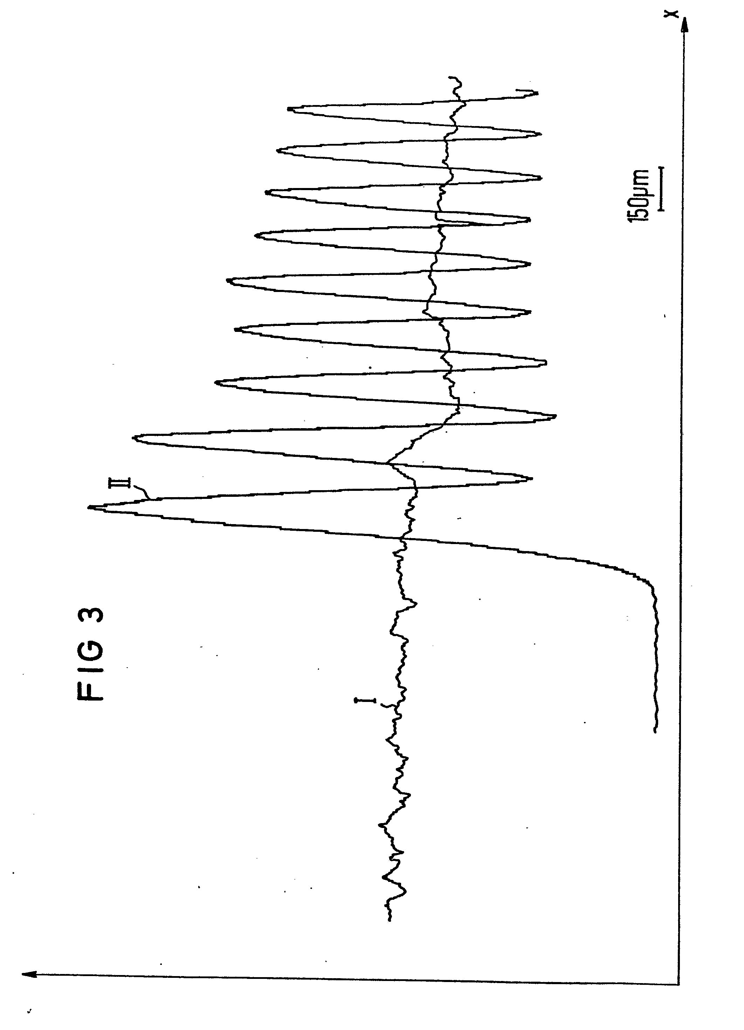

In der Figur 3 sind zwei in der Bildebene längs einer in x-Richtung durch die Achse A verlaufenden Geraden mit einem Fotomultiplier gemessene Lichtintensitätsverteilungen I und II dargestellt. Dabei gibt die Kurve I die im wesentlichen gleichmäßige Verteilung der Lichtintensität in der Bildebene wieder, wenn im Lichtstrahlbündel 2 kein zu vermessender Formkörper 6 angeordnet ist. Die Intensitätsverteilung II gilt für den in Figur 2 dargestellten Fall, bei dem der Kolbenbolzen 6
einen Teil des Lichtstrahlbündels ausblendet. Der in
Figur 3 angegebene Maßstab gibt die Größenverhältnisse
in der x-Richtung wieder. Die Intensitätsverteilung II
ändert sich etwas mit dem Bolzendurchmesser und mit der
Scharfeinstellung. Entlang der als Umriß vermessenen
Mantellinie des Kolbenbolzens 6 ändert sich die Intensitätsverteilung II jedoch nicht. In den in Figur 2
gegebenen Größenverhältnissen ist der Kolbenbolzen
erheblich länger als der Durchmesser des Lichtstrahlbündels 2, der in der Figur 2 etwas übertrieben groß
dargestellt ist. In der Praxis beträgt der in x-Richtung gemessene Durchmesser des Lichtstrahlbündels einige
Millimeter. Zum Vermessen der gesamten in der Objektebene G liegenden Mantellinie des Kolbenbolzens 6 wird
dieser im Ausführungsbeispiel nach Figur 2 in z-Richtung verschoben.

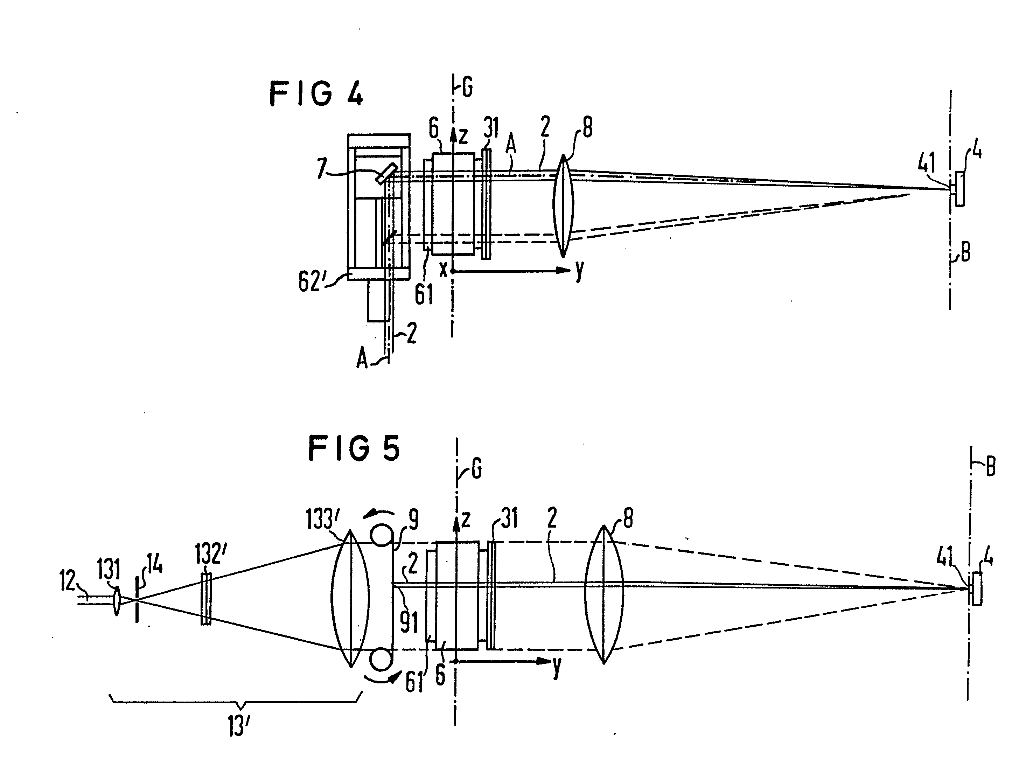

Statt den Kolbenbolzen 6 zu verschieben, kann auch das
Lichtstrahlbündel 2 in Z-Richtung verschoben werden.
Ein Ausführungsbeispiel dazu ist in der Figur 4 in
Draufsicht von oben dargestellt. Dabei sind Elemente
dieses Ausführungsbeispiels, die mit Elementen des
Ausführungsbeispiels nach Figur 2 übereinstimmen,
mit den gleichen Bezugszeichen versehen. Das Ausführungsbeispiel nach Figur 4 unterscheidet sich demnach vom Ausführungsbeispiel der Figur 2 im wesentlichen
dadurch, daß das Lichtstrahlbündel 2 in einer zur z-
Richtung parallelen Richtung auf einen Umlenkspiegel
7 trifft, der es in die y-Richtung umlenkt, bevor es
auf den Formkörper 6 trifft. Der Umlenkspiegel 7 ist
auf einem Präzisionsschiebetisch 62' befestigt und
läßt sich in z-Richtung über die ganze Länge des Formkörpers 5 verschieben. Im Ausführungsbeispiel nach
Figur 4 ist zwischen der Abbildungsoptik 3 und der
Bildebene B noch eine astigmatische Optik 8 im Strahlengang des in x-Richtung beweglichen Lichtstrahlbündels angeordnet. Diese Optik 8 bündelt das Lichtstrahlbündel 2 in der z-Richtung. Sie ist so angeordnet, daß eine ihrer Brennebenen mit der Bildebene B zusammenfällt. Dadurch wird erreicht, daß das Beugungsbild in der Bildebene B nicht mehr mitwandert. Die astigmatische Optik 8 kann beispielsweise ebenfalls aus einer Zylinderlinse oder aus einem Streifenspiegel bestehen. Ein Streifenspiegel hat den Vorteil, daß der Lichtweg gefaltet und so die Baulänge des Geräts erheblich reduziert werden kann.

In der Figur 5 ist eine andere Variante eines Ausführungsbeispiels in Draufsicht von oben dargestellt, bei welchem das Lichtstrahlbündel 2 in z-Richtung bewegt wird. Bei dieser Variante wird ein telezentrisches System 13' verwendet, bei dem die in Richtung des Laserstrahls zweite Linse 132' aus einer Zylinderlinse besteht, die in x-Richtung bündelt, so daß die aus ihm austretenden Lichtstrahlen in z-Richtung betrachtet, parallel verlaufen. In der z-Richtung werden die Strahlen nicht beeinflußt, so daß in Draufsicht von oben, d.h. in einer Richtung entgegengesetzt zur x-Richtung, ein divergentes Strahlenbündel abgestrahlt wird, wie es aus der Figur 5 hervorgeht. Das telezentrische System 13' weist nun in Richtung des Laserstrahls eine dritte Zylinderlinse 133' auf, welche das besagte divergente Strahlenbündel in z-Richtung bündelt. Die dritte Linse 133' ist so angeordnet, daß eine ihrer Brennebenen mit den beiden gemeinsamen Brennebenen der Linsen 131 und 132' zusammenfällt. Dadurch wird bewirkt, daß das divergente Strahlenbündel zu einem parallelen Strahlenbündel - in Draufsicht von oben - gebündelt wird.

Das astigmatische telezentrische System 13' wird so bemessen, daß der Durchmesser des Parallelstrahls in z-Richtung größer oder gleich der Länge des zu vermessenden Formkörpers ist. Der Durchmesser in x-Richtung beträgt wie beim Ausführungsbeispiel nach Figur 2 einige Millimeter. Zwischen dem Formkörper 6 und der dritten Zylinderlinse 133' ist ein Band 9 mit einer Schlitzblende 91 angeordnet. Die Schlitzblende 91 ist mit dem Band 9 in z-Richtung verschiebbar. Das aus der Schlitzblende abgestrahlte Licht bildet das Lichtstrahlbündel 2, welches aufgrund der geeignet gewählten Abmessungen der Schlitzblende 91 einen Durchmesser von einigen Millimetern in der x-Richtung und z-Richtung aufweist.

Alle übrigen Elemente des Ausführungsbeispiels nach Figur 5, die im Strahlengang dieses Lichtstrahlbündels 2 angeordnet sind, stimmen mit den entsprechenden Elementen des Ausführungsbeispiels nach Figur 4 überein und sind daher mit den gleichen Bezugszeichen versehen.

Als Sensoreinrichtung wird bei den beschriebenen Ausführungsbeispielen zweckmäßig eine Fotodiodenzeile verwendet, die in x-Richtung verläuft. Es könnte aber auch ein Fotodiodenfeld verwendet werden.

Der Meßvorgang läuft zweckmäßigerweise so ab, daß während der Verschiebung des Lichtstrahlbündels 2 und des Formkörpers 6 relativ zueinander die Intensitätsverteilung auf der Sensorfläche der Fotodiodenzeile in festen Zeitintervallen, beispielsweise alle 20 ms, abgefragt wird. Die Relativgeschwindigkeit zwischen Formkörper 6 und Lichtstrahlbündel 2 sollte der gewünschten Auflösung in z-Richtung angepaßt werden, d.h. im Bereich der Einstiche sollte die Geschwindigkeit verlangsamt und damit die Auflösung erhöht werden. Außerhalb der 'Einstiche kann mit erhöhter Relativgeschwindigkeit und damit geringerer Auflösung abgetastet werden. Aus der Intensitätsverteilung ist der $x$-Wert der geometrischen Schattengrenze und der zugehörige $z$-Wert zu ermitteln und zu speichern. Diese Meßwertpaare können sofort auf einem Bildschirm oder $xz$-Schreiber ausgegeben werden, so daß am Ende der Messung das vollständige Bild des durchfahrenen Umrißstücks vorliegt.

Der $z$-Wert läßt sich durch einen an einem Präzisionsschiebetisch oder der Verschiebeeinrichtung für die Schlitzblende angebrachten Weggeber ermitteln. Präzisionsschiebetisch oder Verschiebevorrichtung werden zweckmäßigerweise durch elektronisch steuerbare Motoren, beispielsweise Schrittmotoren, bewegt.

Die Ermittlung der geometrischen Schattengrenze erfolgt zweckmäßigerweise durch Eichmessungen an einem Prototypen des Formkörpers. Vielfach reicht aber eine Relativmessung aus, beispielsweise beim Einsatz des Geräts zur Stichprobenüberwachung. Es ist dann vielmehr günstig, den Bereich der größten Steigung bei etwa 50 % der maximalen Intensität als Meßpunkt zu wählen. Zweckmäßig ist es, die Auswertung mit Hilfe eines Rechners vorzunehmen, der auch den Meßvorgang über die elektronischen steuerbaren Motoren und über Weggeber steuert. Der Ablauf des Meßvorgang kann dabei auch hinsichtlich Geschwindigkeit und Auflösung in Abhängigkeit von den Abmessungen des Bolzens optimiert werden. Die Auflösung in $x$-Richtung kann rechnerisch verbessert werden.

Insbesondere lassen sich Meßunsicherheit und Auflösung dadurch verbessern, daß der $x$-Wert für 50% der Maximal-

0022237

intensität aus den Signalen mehrerer Fotodioden im Bereich des Anstiegs errechnet wird. Dafür genügt eine lineare Näherung,die nur geringen Rechenaufwand verursacht.

Ein Winkel in der xz-Richtung zwischen der Mantellinie des Bolzens und der Führung des Schiebetisches bewirkt eine Verzerrung des gemessenen Profils. Diese kann am Ende einer Messung vom Rechner automatisch korrigiert werden. Das reduziert die Anforderungen an die Präzision der Auflage des Bolzens.

Der Rechner kann auch einen Vergleich zwischen dem gemessenen Profil und einem Soll-Profil durchführen, wodurch eine sehr übersichtliche Datenausgabe erreicht werden kann. Aus diesen Gründen ist der Einsatz eines Rechners gegenüber einer vereinfachten Elektronikschaltung zu bevorzugen.

Die Bestimmung des x-Wertes kann auch durch Abzählen der unbeleuchteten oder der beleuchteten Dioden der Diodenzeile mit Hilfe eines Schwellwertes geschehen. Der Schwellwert kann fest eingestellt sein oder während der Messung aus dem Maximum der Intensität in der Zeile automatisch bestimmt werden. Dieses Verfahren wird zweckmäßig bei elektronischer Auswertung ohne Rechner bevorzugt. Diese Elektronische Auswertung läßt sich aber auch an einen Rechner anschließen, der den Rechenablauf steuert und die weitere Auswertung übernimmt.

Ein Vorteil des Geräts liegt noch darin, daß Wärmeausdehnung in der optischen Bank oder in den einzelnen optischen Elementen auf das Meßergebnis keinen Einfluß haben, weil Bild- und Gegenstandsweite sich in gleicher
Weise ändern, so daß die gewählte Vergrößerung konstant
bleibt.

Es sei abschließend noch einmal darauf hingewiesen, daß
das Gerät nicht auf die Vermessung von Kolbenbolzen beschränkt ist, sondern daß es für beliebige Formkörper
verwendbar ist.

11 Patentansprüche
 5 Figuren

0022237

Patentansprüche

1. Gerät zum zumindest stückweisen Vermessen von Umrissen von Formkörpern, insbesondere von Rotationskörpern, g e k e n n z e i c h n e t   d u r c h
a) eine Lichtquelle (1) zum Erzeugen eines längs einer
   Achse (A) ausgesandten kohärenten Lichtstrahlbündels
   (2),
b) eine im Strahlengang des Lichtstrahlbündels (2) angeordnete Abbildungsoptik (3),
c) eine Sensoreinrichtung (4) mit einer im Strahlengang des durch die Abbildungsoptik (3) hindurchgegangenen Lichts angeordneten Sensorfläche (41), die
   in einer Bildebene (B) angeordnet ist, der eine zwischen der Lichtquelle (1) und der Abbildungsoptik
   (3) angeordnete Objektebene (G) zugeordnet ist,
wobei der zu vermessende Formkörper (6) derart anzuordnen ist, daß er in der Objektebene (G) vom Lichtstrahlbündel (2) zumindest gestreift wird und Licht des Lichtstrahlbündels (2) an ihm vorbei durch die Abbildungsoptik (3) zur Sensorfläche (41) gelangt, welche zum
Abtasten einer örtlichen Lichtintensitätsverteilung
in der Bildebene (B) vorgesehen ist.

2. Gerät nach Anspruch 1, d a d u r c h   g e k e n n -
z e i c h n e t ,  daß der Formkörper (6) und das Lichtstrahlbündel (2) in zwei verschiedenen Richtungen (z-
Richtung, x-Richtung) in der Objektebene (G) relativ
zueinander verschiebbar sind.

3. Gerät nach Anspruch 1 oder 2, d a d u r c h   g e -
k e n n z e i c h n e t ,  daß der Formkörper (6) und
die Sensorfläche (21) in Richtung der Achse (A) des
Lichtstrahlbündels (2) relativ zur Abbildungsoptik (3)
verschiebbar sind.

4. Gerät nach einem der vorhergehenden Ansprüche, d a d u r c h   g e k e n n z e i c h n e t , daß die Sensorfläche (41) in der Bildebene (B) relativ zur Abbildungsoptik (3) verschiebbar ist.

5. Gerät nach einem der vorhergehenden Ansprüche, daß die Abbildungsoptik (3) eine Zylinderlinse (31) und die Sensorfläche (41) Sensoreinzelflächen mehrerer einzelner Sensoren umfaßt, und daß die Sensoreinzelflächen in einer Zeile nebeneinander angeordnet sind, die senkrecht zu einer Zylinderlinsenachse verläuft, die parallel zu einer zylindrischen Mantelfläche der Zylinderlinse (31) ist.

6. Gerät nach Anspruch 5, d a d u r c h   g e - k e n n z e i c h n e t , daß die Zylinderlinse (31) so angeordnet ist, daß die Zylinderlinsenachse parallel zu einer (z-Richtung) der verschiedenen Richtungen, in der das Lichtstrahlbündel (2) und der zu vermessende Formkörper (6) relativ zueinander in der Objektebene (G) verschiebbar sind, ausgerichtet ist.

7. Gerät nach einem der vorhergehenden Ansprüche, d a d u r c h   g e k e n n z e i c h n e t , daß die Lichtquelle (1) einen Laser (11) und eine im Laserstrahl (12) angeordnete Aufweitungsoptik (13) umfaßt, die den Laserstrahl (12) auf einen größeren Querschnitt des Lichtstrahlbündels (2) aufweitet.

8. Gerät nach Anspruch 7, d a d u r c h   g e - k e n n z e i c h n e t , daß die Lichtquelle (1) zudem eine im Strahlengang des vom Laser ausgesandten Lichts angeordnete Modenblende (14) aufweist.

0022237

9. Gerät nach Anspruch 2 oder nach Anspruch 2 und einem der Ansprüche 3 bis 8, d a d u r c h  g e k e n n - z e i c h n e t , daß im Strahlengang des Lichtstrahlbündels (2) ein Umlenkspiegel (7) angeordnet ist, der das Lichtstrahlbündel (2) zum Formkörper (6) hin umlenkt und der in Richtung der Achse (A) des noch unabgelenkten Lichtstrahlbündels (2) verschiebbar ist.

10. Gerät nach Anspruch 2 und 7 oder 8, oder nach Anspruch 2 und 7 oder 8 und einem der Ansprüche 3 bis 6, d a d u r c h  g e k e n n z e i c h n e t , daß die Aufweitungsoptik eine astigmatische Aufweitungsoptik (13') umfaßt, welche den Laserstrahl (12) zunächst auf ein Lichtstrahlbündel aufweitet, das in einer Richtung (z-Richtung) einen größeren Durchmesser aufweist, als in der anderen Richtung (x-Richtung) und bei dem der größere Durchmesser größer oder gleich einem Durchmesser des Formkörpers (6) ist und daß zwischen dem Formkörper (6) eine Schlitzblende (9) angeordnet ist, die in Richtung (z-Richtung) des größeren Durchmessers bewegbar ist.

11. Gerät nach Anspruch 5 oder nach Anspruch 5 oder einem der Ansprüche 6 bis 11, d a d u r c h  g e - k e n n z e i c h n e t , daß zwischen der Abbildungs- optik (3) und der Bildebene (B) eine senkrecht zur Zylinderlinse (31) bündelnde astigmatische Optik (8) so angeordnet ist, daß eine ihrer Brennebenen mit der Bildebene (B) zusammenfällt.

## FIG 1

10mm

## FIG 2

5cm

FIG 3

FIG 4

FIG 5

**Europäisches Patentamt**

# EUROPÄISCHER RECHERCHENBERICHT

Nummer der Anmeldung

EP 80 10 3712

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| X | US - A - 3 941 484 (DREYFUS) <br><br> * Figur 3; Spalte 6, Zeilen 14-28 * <br><br> -- | 1,7 | G 01 B 11/24 |
| X | US - A - 4 131 365 (PRYOR) <br><br> * Figur 3; Spalte 6, Zeile 38 - Spalte 8, Zeile 48; Spalte 15, Zeilen 18-64; Spalte 21, Zeilen 22-37 * <br><br> -- | 1,2,4, 5 | |
| | US - A - 4 148 587 (ERDMANN et al.) <br><br> * Figur 1; Spalte 5, Zeilen 47-68 * <br><br> -- | 3 | RECHERCHIERTE SACHGEBIETE (Int. Cl. 3) <br><br> G 01 B 11/24 <br> 11/30 |
| | DE - A - 2 324 232 (PRYOR) <br><br> * Figuren 8,9; Seite 44, Zeile 25 - Seite 45, Zeile 2; Seite 47, Zeilen 19-30 * <br><br> -- | 5,9 | |
| | US - A - 3 843 261 (PRYOR) <br><br> * Figur 6; Spalte 13, Zeilen 23-48 * <br><br> ---- | 5 | |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 07-10-1980 | IVES |

EPA form 1503.1 06.78